(19) Europäisches Patentamt
European Patent Office
Office européen des brevets

(11) EP 3 083 804 B1

(12) **EUROPEAN PATENT SPECIFICATION**

(45) Date of publication and mention of the grant of the patent:
**29.11.2017 Bulletin 2017/48**

(21) Application number: **14815244.0**

(22) Date of filing: **18.12.2014**

(51) Int Cl.:
***C08K 5/46*** (2006.01) ***C08K 5/45*** (2006.01)
***H01B 3/00*** (2006.01) ***H01B 9/00*** (2006.01)

(86) International application number:
**PCT/EP2014/003436**

(87) International publication number:
**WO 2015/090604 (25.06.2015 Gazette 2015/25)**

(54) **POLYOLEFIN COMPOSITION FOR MEDIUM/HIGH/EXTRA HIGH VOLTAGE CABLES**

POLYOLEFINZUSAMMENSETZUNG FÜR MITTEL-/HOCH-/HÖCHSTSPANNUNGSKABEL

COMPOSITION DE POLYOLÉFINE POUR CÂBLES À MOYENNE/HAUTE/EXTRA-HAUTE TENSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.12.2013 EP 13005998**
**27.06.2014 EP 14174807**

(43) Date of publication of application:
**26.10.2016 Bulletin 2016/43**

(73) Proprietor: **Borealis AG**
**1220 Vienna (AT)**

(72) Inventors:
- **WUTZEL, Harald**
**AT- 1100 Wien (AT)**
- **JARVID, Markus**
**S-449 43 Nol (SE)**
- **ANDERSSON, Mats**
**S-449 51 Alafors (SE)**
- **JOHANSSON, Anette**
**S-412 82 Göteborg (SE)**
- **GUBANSKI, Stanislaw**
**S-412 61 Göteborg (SE)**

(74) Representative: **Kador & Partner**
**Corneliusstraße 15**
**80469 München (DE)**

(56) References cited:
**GB-A- 935 774** **US-A- 5 559 164**
**US-A1- 2007 155 911** **US-A1- 2008 045 619**
**US-A1- 2010 263 903**

- **DATABASE CA [Online] CHEMICAL ABSTRACTS SERVICE, COLUMBUS, OHIO, US; GAO, GUANGGANG ET AL: "Preparation method and use method of photocrosslinkable low-smoke halogen-free flame-retardant polyolefin material", XP002724012, retrieved from STN Database accession no. 158:728634 -& CN 103 102 551 A (HEILONGJIANG ORIENT SCIENCE AND TECHNOLOGY CO., LTD., PEOP. REP. CHINA) 15 May 2013 (2013-05-15)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 083 804 B1

## Description

The present invention relates to a polyolefin composition with improved electrical breakdown strength obtained by increasing the electrical tree initiation field, to a wire or cable, in particular a medium, high or extra high voltage cable, comprising such a composition, and to the use of such a composition for the production of a wire or cable, in particular a medium, high or extra high voltage cable.

A typical medium voltage power cable, usually used for voltages from 6 to 72 kV, a typical high voltage cable used for voltages higher than 72 kV, and a typical extra high voltage cable used for voltages higher than 220 kV, comprises one or more conductors in a cable core that is surrounded by several layers of polymeric materials, including an inner semiconducting layer, followed by an insulating layer, and then an outer semiconducting layer. These layers are normally cross-linked. To these layers, further layers may be added, such as a metallic tape or wire shield, screens, and, finally, outermost jacketing layer(s). The layers of the cable are based on different types of polymer compositions. As insulating materials, today cross-linked polyolefins like cross-linked low density polyethylene are predominantly used.

It is a constant aim of cable manufacturers to increase the electrical breakdown strength of cable materials, in particular cable insulation materials, in order to achieve greater reliability or to develop new cable constructions where the insulation is subjected to higher stress. Defects in the insulation set a limit on the minimum insulation thickness and thereby maximum electrical design stress applied to the cable. To secure high reliability on high stress cable constructions it is known to reduce the amount of contaminants in the insulation material. However, nowadays already super clean materials are used for insulation, and improvements in electrical breakdown strength by further reduction of contaminants are associated with a significant increase in cost.

It is furthermore known to use active additives, namely so called voltage stabilisers to increase the initiation field of electrical trees, in order to increase the electrical breakdown strength of cable insulation materials. For example, EP 25 45114 discloses a general class of benzil derivative used to that purpose.

However, there is still the need for voltage stabilisers which improve the electrical breakdown strength of polyolefin compositions used for medium/high/extra high voltage cable insulation. Such voltage stabiliser compounds should usually have a low ionisation potential to decrease the energy of high energy electrons and hence increase the electrical breakdown strength efficiently (see e.g. A.C. Ashcraft, R.M. Eichhorn, and S.R.G., "Laboratory Studies of Treeing in Solid Dielectrics and Voltage Stabilization of Polyethylene" presented as I.E.E.E. International Symposium on Electrical Insulation, Montreal, Canada, 1978).

At the same time, the compounds must be soluble in the polyolefin, usually cross-linked polyethylene, used as a matrix polymer in the composition, and, furthermore, must show low migration tendency, so that the loss of the compound in the insulation material with time is as low as possible.

Still further, as usually insulating compositions are cross-linked polyolefins, the voltage stabiliser must as far as possible be compatible to commonly used cross-linking agents, such as organic peroxides, so that, on the one hand, the cross-linking process is not negatively affected, and, on the other hand, the voltage stabiliser is not reacting or decomposing which would reduce its efficiency or even, in the worst case, render it inactive. Of course, the voltage stabiliser should also be compatible in this sense with regard to all other components of the polyolefin composition.

It is thus an object of the invention, to provide a polyolefin composition comprising a voltage stabiliser for further improving the electrical breakdown strength of a polyolefin composition, especially for the use as an insulating composition in a medium/high/extra high voltage cable, which has the above-mentioned properties. In particular the voltage stabiliser provides a significant improvement on electrical tree initiation field, has preferably also a good solubility in the polyolefin matrix and a low migration tendency, and more preferably is compatible with regard to other components of the polyolefin composition, in particular to cross-linking agents.

The above objects can be achieved by the use of specific compounds as voltage stabilisers.

The present disclosure relates to a polyolefin composition comprising:

(A) a polyolefin,

(B) a compound comprising, preferably consisting of, the structural unit according to the following formula (I):

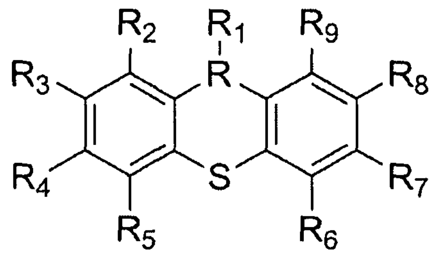

(I)

wherein

R is C or N; $R_1$ is hydrogen, a heteroatom or a hydrocarbyl group which may contain heteroatoms; $R_2$, $R_3$, $R_4$, $R_5$, $R_6$, $R_7$, $R_8$ and $R_9$ independently are hydrogen, or a hydrocarbyl group which may contain heteroatoms; or at least two of said $R_2$, $R_3$, $R_4$, $R_5$, $R_6$, $R_7$, $R_8$ and $R_9$ together with the ring atoms of the ring system of formula (I) they are attached to, form a further aromatic or non-aromatic ring fused to the ring system of formula (I).

The term "hydrocarbyl group" denotes any substituent which is composed of carbon and hydrogen atoms regardless of the degree of saturation, e.g. alkyl groups, alkenyl groups, alkinyl groups and aromatic groups composed of C and H. Where it is indicated that a hydrocarbyl group may contain heteroatoms these are atoms different from C and H, such as Si, N, P, O or S, typically N or O. Conveniently, the heteroatom is selected from the group consisting of Si, N, P, O and S.

Preferably at least $R_2$ is hydrogen. Most preferably at least $R_2$ and $R_9$ are hydrogen.

According to one embodiment, R is C and $R_1$ is O.

$R_6$ or $R_8$ is then preferably selected from the group consisting of, alkyl, ether and ester group. Then, the remaining residues of $R_2$, $R_3$, $R_4$, $R_5$, $R_6$, $R_7$, $R_8$ and $R_9$ are preferably hydrogen.

The ester group is preferably selected from the group consisting of $CH_3CO_2$-, $C_2H_5CO_2$-, $C_3H_7CO_2$-, $C_4H_9CO_2$-, $C_5H_{11}CO_2$-, $C_6H_{13}CO_2$-, $C_7H_{15}CO_2$-, $C_8H_{17}CO_2$-, $C_9H_{19}CO_2$-, $C_{10}H_{21}CO_2$- and $C_{11}H_{23}CO_2$-.

The ether group is conveniently selected from the group consisting of-$OCH_3$, -$OC_2H_5$, -$OC_3H_7$, -$OC_4H_9$, -$OC_5H_{11}$, -$OC_6H_{13}$, -$OC_7H_{15}$, -$OC_8H_{17}$,-$OC_9H_{19}$, -$OC_{10}H_{21}$, -$OC_{11}H_{23}$ and -$OC_{12}H_{25}$.

The alkyl group is conveniently selected from the group consisting of-$CH_3$, -$C_2H_5$, -$C_3H_7$, -$C_4H_9$, -$C_5H_{11}$, -$C_6H_{13}$, -$C_7H_{15}$, -$C_8H_{17}$, -$C_9H_{19}$, -$C_{10}H_{21}$, -$C_{11}H_{23}$ and $C_{12}H_{25}$.

According to further preferred embodiments $R_6$ and/or $R_8$ is $CH_3CO_2$- or-$OCH_3$ or -$C_3H_7$ or $CH_{2=}C(CH_3)CO_2$-.

Most preferably $R_8$ is $CH_3CO_2$- and $R_2$, $R_3$, $R_4$, $R_5$, $R_6$, $R_7$, and $R_9$ are hydrogen.

Most preferably $R_6$ is -$C_3H_7$ and $R_2$, $R_3$, $R_4$, $R_5$, $R_7$, $R_8$ and $R_9$ are hydrogen.

Most preferably $R_8$ is -$OCH_3$ and $R_2$, $R_3$, $R_4$, $R_5$, $R_6$, $R_7$ and $R_9$ are hydrogen.

Most preferably $R_8$ is -$C_3H_7$ and $R_2$, $R_3$, $R_4$, $R_5$, $R_6$, $R_7$ and $R_9$ are hydrogen.

Most preferably $R_8$ is $CH_{2=}C(CH_3)CO_2$- and $R_2$, $R_3$, $R_4$, $R_5$, $R_6$, $R_7$ and $R_9$ are hydrogen.

According to another embodiment R is N.

Then $R_1$ is preferably selected from the group consisting of -$CH_3$, -$C_2H_5$, - $C_3H_7$, -$C_4H_9$, -$C_5H_{11}$, -$C_6H_{13}$, -$C_7H_{15}$, -$C_8H_{17}$, -$C_9H_{19}$, -$C_{10}H_{21}$, -$C_{11}H_{23}$ and - $C_{12}H_{25}$.

Preferably $R_2$, $R_3$, $R_4$, $R_5$, $R_6$, $R_7$, $R_8$ and $R_9$ are hydrogen.

Most preferably $R_1$ is -$CH_3$ and $R_2$, $R_3$, $R_4$, $R_5$, $R_6$, $R_7$, $R_8$ and $R_9$ are hydrogen.

It has been found that the use of compounds (B) described above as voltage stabilisers yields insulating polyolefin compositions with significantly improved electrical breakdown strength. Furthermore, the compounds have a good solubility in the polyolefin matrix and a low migration tendency, and are compatible with the other components of the polyolefin composition, in particular with cross-linking agents.

Furthermore, preferably the compounds comprising, or consisting of, a structural unit according to formula (I) are free of halogen substituents or substituents containing halogen atoms.

It is preferred in all of the above embodiments that compound (B) consists of the structural unit described for the particular embodiment. However, for all cases where the aromatic system(s) of formula (I) contain at least two substituents, it is also possible that structural units of any of the above described embodiments are made into oligomeric structures, to increase the molecular weight.

Preferably compound (B) is free of any bond to polyolefin (A).

Mixtures of compounds (B) may also be used. Preferably a mixture of a compound (B) wherein $R_8$ is $CH_3CO_2$- and $R_2$, $R_3$, $R_4$, $R_5$, $R_6$, $R_7$, and $R_9$ are hydrogen and a compound (B) wherein $R_6$ is -$C_3H_7$ and $R_2$, $R_3$, $R_4$, $R_5$, $R_7$, $R_8$ and $R_9$ are hydrogen, is used.

Preferably, compound (B) is present in the composition in an amount of 0.001 to 10 wt%, more preferably 0.01 to 5 wt%, still more preferably from 0.05 to 4 wt%, still more preferably 0.1 to 3 wt%, and most preferably from 0.1 to 2 wt%. Further preferred ranges for compound (B) present in the composition are 0.05 to 3 wt%, 0.05 to 2 wt% or 0.05 to 1.5 wt%.

Polyolefin (A) may be any polyolefin material suitable to be used for the production of a layer of cable, preferably power cable layer, more preferably an insulation layer of a power cable.

Polyolefin (A) preferably comprises, or consists of, a polyethylene or polypropylene. Where herein it is referred to a "polymer", e.g. polyethylene, this is intended to mean both a homo- and copolymer, e.g. an ethylene homo- and copolymer.

Where polyolefin (A) comprises, or consists of, a polyethylene, the polymer may be produced in a high pressure process or in a low pressure process in the presence of a catalyst, for example a chromium, Ziegler-Natta or single-site

catalyst, resulting in either unimodal or multimodal polyethylene.

Where polyolefin (A) comprises, or consists of, a polypropylene, this may be a unimodal or multimodal propylene homo- or copolymer and/or a heterophasic polypropylene.

Furthermore, where polyolefin (A) comprises, or consists of, a polypropylene, it is preferred that it has an $MFR_2$ (230°C, 2.16 kg) of from 0.001 to 25 g/10min.

In a preferred embodiment, polyolefin (A) comprises or consists of an ethylene homo- or copolymer. In the case of an ethylene copolymer, it is preferred that it includes 0.001 to 50 wt%, more preferably 0.1 to 40 wt%, still more preferably 0.1 to 35 wt%, still more preferably 0.1 to 30 wt%, even more preferably 0.1 to 25 wt% of one or more comonomers.

Preferably, the density of the ethylene homo or- copolymer is higher than 0.860 g/cm$^3$.

Furthermore, preferably the density of the ethylene homo or- copolymer is not higher than 0.960 g/cm$^3$.

The $MFR_2$ (2.16 kg, 190 °C) of the ethylene homo or- copolymer preferably is from 0.01 to 50 g/10min, more preferably is from 0.1 to 20 g/10min, still more preferably is from 0.2 to 15 g/10min, and most preferably is from 0.2 to 10 g/10 min.

Still further, it is preferred that polyolefin (A) comprises or consists of a polyethylene which has been produced by a high pressure process using free radical polymerization. The polymerization generally is performed at pressures of 120 to 350 MPa and at temperatures of 150 to 350 °C.

The polyethylene may be an ethylene homopolymer or a copolymer of ethylene.

As a comonomer in the ethylene copolymer, a non-polar alpha-olefin may be used, either alone or in addition with further types of comonomers.

Such alpha-olefins may also comprise further unsaturation present e.g. in polyunsaturated comonomers such as dienes.

Preferred non polar alpha olefins are $C_3$-$C_{20}$ alpha olefins, preferably $C_3$ to $C_{10}$ alpha-olefins are used as comonomers, such as propylene, 1-butene, 1-hexene, 4-methyl-1-pentene, styrene, 1-octene, 1-nonene, polyusaturated comonomers preferably $C_8$ to $C_{14}$ non-conjugated dienes, such as a $C_8$ to $C_{14}$ non-conjugated diene, e.g. 1,7-octadiene, 1,9-decadiene, 1,11-dodecadiene, 1,13-tetradecadiene, or any mixture thereof. Further examples of polyunsaturated comonomers are dienes like 7-methyl-1,6-octadiene, 9-methyl-1,8-decadiene, or mixtures thereof can be mentioned.

It is also possible to use polar comonomers, optionally in combination with the non polar alpha olefin comonomer(s). Preferably, as polar monomer units, compounds containing hydroxyl groups, alkoxy groups, carbonyl groups, carboxyl groups, ether, and ester groups are used.

Still more preferably, the polar monomer units are selected from the group of alkyl acrylates, alkyl methacrylates, and vinyl acetates or mixtures therefrom. Further preferred, the comonomers are selected from $C_1$- to $C_6$-alkyl acrylates, $C_1$- to $C_6$-alkyl methacrylates, and vinyl acetate. Still more preferably, the polar copolymer comprises a copolymer of ethylene with $C_1$- to $C_4$-alkyl, such as methyl, ethyl, propyl or butyl acrylates or vinyl acetate, or any mixture thereof.

If polar comonomer units are present in polyolefin (A) it is preferred that the amount is as defined above and below.

If the polyethylene is a copolymer, it is preferred that it includes 0.001 to 50 wt%, more preferably 0.1 to 40 wt%, still more preferably 0.1 to 35 wt%, still more preferably 0.1 to 30 wt%, even more preferably 0.1 to 25 wt%, of one or more comonomers.

Polyolefin (A) preferably is cross-linkable. Cross-linking may be achieved e.g. by further including a cross-linking agent into the composition or by the incorporation of cross-linkable groups into polyolefin (A).

In a preferred embodiment, the polyolefin composition further comprises a cross-linking agent.

In the context of the present invention, a cross-linking agent is defined to be any compound capable to generate radicals which can initiate a cross-linking reaction. Preferably, the cross-linking agent contains at least one - O-O- bond or at least one -N=N- bond.

The cross-linking agent, e.g. a peroxide, is preferably added in an amount of less than 10 wt%, more preferably 0.01 to 5.0 wt%, still more preferably 0.01 to 3.0 wt%, even more preferably 0.05 to 2.6 wt%, based on the weight of the cross-linkable polyolefin composition.

As peroxides as non-limiting examples of cross-linking agents are i.a. di-tert-amylperoxide, 2,5-di(tert-butylperoxy)-2,5-dimethyl-3-hexyne, 2,5-di(tert-butylperoxy)-2,5-dimethylhexane, tert-butylcumylperoxide, di(tert-butyl)peroxide, dicumylperoxide, bis(tertbutylperoxyisopropyl)benzene, butyl-4,4-bis(tert-butylperoxy)-valerate, 1,1-bis(tert-butylperoxy)-3,3,5-trimethylcyclohexane, tert-butylperoxybenzoate, dibenzoylperoxide, 2,5-dimethyl-2,5-di(benzoylperoxy)hexane, 1,1-di(tert-butylperoxy)cyclohexane, 1,1-di(tert amylperoxy)cyclohexane, or any mixtures thereof.

Preferably, the peroxide is selected from 2,5-di(tert-butylperoxy)-2,5-dimethylhexane, di(tert-butylperoxy-isopropyl)benzene, dicumylperoxide, tert-butylcumylperoxide, di(tert-butyl)peroxide, or mixtures thereof. Most preferably, the peroxide is dicumylperoxide.

It is preferred that cross-linking is effected by including a cross-linking agent, such as peroxide in any of the above mentioned embodiments, into the composition.

However, cross-linking may also be achieved by hydrolysable silane groups which may be present in polyolefin (A). Thus, polyolefin (A) may also comprise or consist of a cross-linkable polyolefin containing hydrolysable silane groups. Hydrolysable silane groups are typically crosslinked by a condenstation catalyst in the presence of water.

The hydrolysable silane groups may be introduced into the polyolefin by copolymerisation of e.g. ethylene monomers with silane group containing comonomers or by grafting, i.e. by chemical modification of the polymer by addition of silane groups mostly in a radical reaction. Both techniques are well known in the art.

In case polyolefin (A) comprises or consists of an unsaturated polyolefin, i.e. a polyolefin comprising carbon-carbon double bonds, then preferably the polyolefin has a total amount of carbon-carbon double bonds/1000 carbon atoms of 0.1 or more, more preferably of 0.2 or more, still more preferably of 0.3 or more, and most preferably more than 0.37.

The upper limit of the amount of carbon-carbon double bonds present in the polymer is not limited and may preferably be less than 5.0/1000 carbon atoms, preferably less than 3.0/1000 carbon atoms, or more preferably less than 2.5 /1000 carbon atoms.

When used in combination with the unsaturated polyolefin, the term "total amount of carbon-carbon double bonds" refers to those double bonds originating from vinyl groups, vinylidene groups and trans-vinylene groups. The amount of each type of double bond is measured as indicated in the experimental part.

The incorporation of the total amount of carbon-carbon double bonds within the polyolefin component enables to accomplish improved cross-linking properties.

The total amount of vinyl groups is preferably higher than 0.02/1000 carbon atoms, more preferably higher than 0.05/1000 carbon atoms, still more preferably higher than 0.08/1000 carbon atoms, and most preferably higher than 0.11/1000 carbon atoms.

Preferably, the total amount of vinyl groups is lower than 4.0/1000 carbon atoms.

Preferred unsaturated polyolefin (A) is an unsaturated polyethylene or an unsaturated polypropylene. More preferably, the unsaturated polyolefin is an unsaturated polyethylene and more preferably an unsaturated homo or copolymer or even more preferably an unsaturated polyethylene homo or copolymer.

Preferably, the unsaturated polyolefin is prepared by copolymerising at least one olefin monomer with at least one polyunsaturated comonomer.

In a preferred embodiment, the polyunsaturated comonomer consists of a straight carbon chain with at least 8 carbon atoms and at least 4 carbon atoms between the non-conjugated double bonds, of which at least one is terminal.

Siloxanes having the following formula:

$$CH_2=CH-[Si(CH_3)_2-O]_n-Si(CH_3)_2-CH=CH_2,$$

wherein n=1 or higher can also be used as a polyunsaturated comonomer. As an example, divinylsiloxanes, e.g. alpha,omega-divinylsiloxane, can be mentioned.

In addition to the polyunsaturated comonomer, further comonomers can optionally be used, preferably non polar $C_3$-$C_{20}$ alpha olefin comonomers, more preferably $C_3$ to $C_{10}$ alpha-olefin comonomers without further unsaturation, such as propylene, 1-butene, 1-hexene, 4-methyl-1-pentene, styrene, 1-octene, and/or 1-nonene, polar comonomers or any mixture thereof.

It is also possible to use polar comonomers, optionally in combination with the non polar alpha olefin comonomer(s). Preferably, as polar monomer units, compounds containing hydroxyl groups, alkoxy groups, carbonyl groups, carboxyl groups, ether, and ester groups are used.

Still more preferably, the polar monomer units are selected from the group of alkyl acrylates, alkyl methacrylates, and vinyl acetates or mixtures therefrom. Further preferred, the comonomers are selected from $C_1$- to $C_6$-alkyl acrylates, $C_1$- to $C_6$-alkyl methacrylates, and vinyl acetate. Still more preferably, the polar copolymer comprises a copolymer of ethylene with $C_1$- to $C_4$-alkyl, such as methyl, ethyl, propyl or butyl acrylates or vinyl acetate, or any mixture thereof.

If polar comonomer units are present in polyolefin (A) it is preferred that the amount is as defined above.

When preparing the unsaturated polyolefin such as an unsaturated polyethylene in a high pressure process, the polymerisation is generally performed at pressures in the range of 120 to 350 MPa and at temperatures in the range of 150 to 350 °C.

The polyolefin can be unimodal or multimodal, e.g. bimodal.

In a preferred embodiment, the polyolefin (A) as polyethylene or the preferably unsaturated polyethylene contains at least 50 wt-% ethylene monomer units.

Polyethylene, or preferably unsaturated polyethylene, of low density is preferred.

In addition to the components polyolefin (A) and aromatic compound (B), the polyolefin composition may further comprise components, which may, for example, be any type of other polymer.

In one embodiment, the polyolefin composition further comprises a copolymer (C), which may be a polar or unpolar copolymer. If copolymer (C) is a polar copolymer, said polar copolymer may preferably be an olefin copolymer,

more preferably propylene or ethylene copolymer containing polar comonomers preferably the ones defined above.

Optionally, the polyolefin composition further comprises a scorch retarder. In the context of the present invention, a "scorch retarder" is defined to be a compound that reduces the formation of scorch during extrusion of a polyolefin composition, at typical extrusion temperatures used, if compared to the same polyolefin composition extruded without said compound. Besides scorch retarding properties, the scorch retarder may simultaneously result in further effects like boosting, i.e. enhancing cross-linking performance during the cross-linking step.

Preferred scorch retarders are unsaturated dimers of aromatic alphamethyl alkenyl monomers, such as 2,4-di-phenyl-4-methyl-1-pentene, substituted or unsubstituted diphenylethylene, quinone derivatives, hydroquinone derivatives, monofunctional vinyl containing esters and ethers, monocyclic hydrocarbons having at least two or more double bonds, or mixtures thereof. More preferably, the scorch retarder is selected from 2,4-diphenyl-4-methyl-1-pentene, substituted or unsubstituted diphenylethylene, or mixtures thereof.

Preferably, the amount of scorch retarder is within the range of 0.005 to 1.0 wt%, more preferably within the range of 0.001 to 0.8 wt%, based on the weight of the cross-linkable polyolefin composition. Further preferred ranges are 0.001 to 0.75 wt%, 0.005 to 0.70 wt% and 0.01 to 0.50 wt%, based on the weight of the cross-linkable polyolefin composition.

The polyolefin composition may contain further additives, such as antioxidant(s), stabiliser(s), processing aid(s), and/or cross-linking booster(s). As antioxidant, sterically hindered or semi-hindered phenols, aromatic amines, aliphatic sterically hindered amines, organic phosphates, thio compounds, and mixtures thereof, can be mentioned.

Typical cross-linking boosters may include compounds containing at least 1, preferably at least 2, unsaturated groups, e.g. vinyl or an allyl groups, such as an aliphatic or aromatic compound, an ester, an ether, or a ketone, which contains at least 1, preferably at least 2, unsaturated group(s), such as a cyanurate, an isocyanurate, a phosphate, an ortho formate, an aliphatic or aromatic ether, or an allyl ester of benzene tricarboxylic acid. Examples of esters, ethers and ketones are compounds selected from general groups of diacrylates, triacrylates, tetraacrylates, triallylcyanurate, triallylisocyanurate, or any mixtures thereof, e.g. triallylcyanurate, triallylisocyanurate, and di-, tri- or tetra-acrylates.

As further additives, flame retardant additives, acid scavengers, inorganic filler(s), preferably selected from carbon black or flame retardant filler, water-tree retardant(s) and other voltage stabiliser(s) can be mentioned.

If an antioxidant, optionally a mixture of two or more antioxidants, is used, the added amount can range from 0.005 to 2.5 wt%, based on the weight of the polyolefin composition.

In general, if a polyethylene is used in the composition, the antioxidant(s) are preferably added in an amount of 0.005 to 1.5 wt%, more preferably, 0.01-1.2 wt%, even more preferably 0.02 to 0.80 wt%, based on the weight of the polyolefin composition.

Similarly, if a polypropylene is used in the composition, the antioxidant(s) are preferably added in an amount of 0.005 to 2 wt%, more preferably 0.01 to 1.5 wt%, even more preferably 0.05 to 1 wt%, based on the weight of the polyolefin composition.

Further additive(s) may be present in an amount of 0.001 to 5 wt%, more preferably 0.005 to 3 wt%, and still more preferably 0.005 to 2 wt%, based on the weight of the polyolefin composition. Flame retardant additives and inorganic fillers can be added in higher amounts.

If used for semiconductive layers, the composition may comprise conductive fillers in usual amounts, preferably in an amount of less than 60 wt%, more preferably from 1 to 50 wt%.

Further, if used for semiconductive layers, the composition may comprise carbon black in usual amounts, preferably in an amount of from 10 to 60 wt%, more preferably from 20 to 50 wt%.

The $MFR_2$ (2.16 kg, 190 °C) of the polyolefin composition preferably is from 0.01 to 50 g/10min, more preferably is from 0.1 to 20 g/10min, and most preferably is from 0.2 to 10 g/10min when no flame retardant additives nor inorganic filler is present.

The polyolefin (A) and the compound (B), optionally in combination with one or more optional additives discussed above, can be blended by any conventional blending technique to result in the polyolefin composition of the invention.

The polyolefin composition preferably contains carbon-carbon double bonds in an amount of at least 0.1/1000 carbon atoms, or preferably at least 0.2/1000 carbon atoms or more preferred 0.30/1000 carbon atoms. The upper limit of the amount of carbon-carbon double bonds present in the polyolefin composition is not limited and may preferably be of less than 5.0/1000 carbon atoms, preferably of less than 3.0/1000 carbon atoms, or more preferably of less than 2.5/1000 carbon atoms.

The total amount of double bonds of the cross-linkable polyolefin composition is based on vinyl, vinylidene and trans-vinylene groups/1000 carbon atoms of component (A) and/or any further components in the polyolefin composition comprising such groups.

C-C double bonds present in the polyolefin composition include vinyl groups and the total amount of said vinyl groups is, in the given preference order, of at least 0.02/1000 carbon atoms, at least 0.05/1000 carbon atoms, at least 0.08/1000 carbon atoms, at least 0.10/1000 carbon atoms, or of at least 0.11/1000 carbon atoms.

The upper limit of the total amount of the vinyl groups present in the polyolefin composition is typically, in the

given preference order, of up to 4.0/1000 carbon atoms, of up to 3.0/1000 carbon atoms, up to 2.5/1000 carbon atoms, or of up to 2.0/1000 carbon atoms.

Accordingly, the total amount the vinyl groups, if present, contributes to the total amount of C-C double bonds present in the polyolefin composition. The total amount of vinyl groups can e.g. consist of any the above mentioned vinyl groups from the polymer and, if present, added other additives such as boosters, scorch retarders or other further additive(s).

The present disclosure relates to a polyolefin composition, as described herein, which is a power cable polyolefin composition. The difference between a polyolefin composition and a power cable polyolefin composition is that the power cable polyolefin composition has a low amount of undesired solid particles. Thus, a power cable polyolefin composition, in accordance with the present invention, has a high level of "physical cleanliness". A low amount of undesired solid particles are a prerequisite for a power cable polyolefin composition as otherwise the power cable will be prone to dielectric breakdown. Hence, a general polyolefin composition without a low and controlled level of undesired solid particles may not work in a power cable. The power cable polyolefin composition, as described herein, is a power cable insulation polyolefin composition. Thus, the power cable polyolefin composition is in this embodiment especially suitable for insulation in a power cable, as described herein.

Accordingly, when the power cable polyolefin composition is a power cable insulation polyolefin composition, the power cable polyolefin composition has special properties typical for a power cable insulation composition.

Special properties of a power cable insulation may be, for example, high level of "physical cleanliness" i.e. low level of solid particles.

From the polyolefin composition described above, a cross-linked composition can be prepared by blending with a cross-linking agent, followed by treatment under cross-linking conditions, thereby increasing the cross-linking level. Cross-linking can be effected by treatment at increased temperature, e.g. at a temperature of at least in the range of 150-160°C. When peroxides are used, cross-linking is generally initiated by increasing the temperature to the decomposition temperature of the corresponding peroxide. When the peroxide decomposes, radicals are generated from the peroxide. These radicals then initiate the cross-linking reaction.

The total amount of additive(s) in the polyolefin composition according to the invention is generally 0.05 to 15 wt%, preferably 0.1 to 12 wt%, more preferably 0.1 to 10 wt%.

From the polyolefin composition a multilayered article can be prepared wherein at least one layer comprises said polyolefin composition. When cross-linking is initiated, a cross-linked multilayered article is obtained. Preferably, the multilayered article (either cross-linked or not) is a cable, preferably a power cable.

In the context of the present invention, a power cable is defined to be a cable transferring energy operating at any voltage. The voltage applied to the power cable can be alternating (AC), direct (DC), or transient (impulse).

In a preferred embodiment, the multilayered article is a power cable operating at voltages higher than 1 kV. In other preferred embodiments, the power cable prepared is operating at 6 kV or higher.

The power cable can be prepared in a process wherein the composition, optionally in combination with a cross-linking agent, is applied onto a substrate by extrusion. In such an extrusion process, the sequence of mixing the components of the composition can be varied, as explained below.

According to a preferred embodiment, the polyolefin (A), optionally in combination with other polymer component(s), and the compound (B) are mixed with each other and possibly with further additive(s), either on solid pellets or powder of the different polymer components or by melt mixing, followed by forming pellets from the melt.

Subsequently, if used, the cross-linking agent, preferably a peroxide, and optionally a scorch retarder and/or a cross-linking booster are added to the pellets or powder in a second step. Alternatively, the scorch retarder and/or cross-linking booster could already be added in the first step, together with the additives. The final pellets are fed to the extruder, e.g. a cable extruder.

According to another preferred embodiment, instead of a two-step process, the polyolefin (A) and any further polymeric component(s) of the composition, preferably in the form of pellets or powder, compound (B) and, optionally, the further additives, cross-linking agent, and/or scorch retarder, are added to a compounding extruder, single or twin screw.

Preferably, the compounding extruder is operated under careful temperature control.

According to another preferred embodiment, a mix of compound (B) with all other additives, i.e. including antioxidant (s) and cross-linking agent and optionally a scorch retarder and/or further additives such as a cross-linking booster, are added onto the pellets or powder made of the polyolefin (A) and optionally other polymer component(s).

According to another preferred embodiment, pellets made of the polyolefin (A) and compound (B), optionally further containing further polymeric components and additional further additive(s), are prepared in a first step, e.g. by melt mixing. These pellets, obtained from the melt mixing, are then fed into the cable extruder. Optionally, subsequently, cross-linking agent and optionally a scorch retarder and/or a cross-linking booster are either fed prior to the hopper, in the hopper or directly into the cable extruder and optionally together with further polymeric components if they have not been added in the first step. Alternatively, cross-linking agent and/or scorch retarder and/or cross-linking booster are

already added to the pellets before feeding these pellets into the cable extruder or only the crosslinking agent is added prior to the hopper, in the hopper or directly in the cable extruder if all other components already have been added in earlier step(s).

According to another preferred embodiment, pellets made of the polyolefin (A) and any further polymeric component(s) without any additional further component(s) are fed to the extruder. Subsequently, compound (B) and optionally antioxidant(s), cross-linking agent(s) and optionally a scorch retarder, optionally in combination further additive(s) such as a cross-linking booster, are either fed in the hopper or directly fed into the polymeric melt within the cable extruder. The compound (B) could be added in this step instead, together with the antioxidant(s), cross-linking agent, scorch retarder and the other optional additives used. Alternatively, one or more of these components, i.e. cross-linking agent, scorch retarder, cross-linking booster, antioxidant(s), compound (B) or a mixture of these components is already added to the pellets before feeding these pellets into the cable extruder, e.g. the components not already present in the fed pellets that should be present in the cable needs to be added at any position in the cable extrusion step.

According to another preferred embodiment, the compound (B) as described above can also be provided in a master batch which comprises at least a matrix polymer and the compound (B). Compound (B) could also be present in the pellets and antioxidant (s), crosslinking agent etc could be added in one or more masterbatches.

The present disclosure is also therefore directed to a master batch comprising a matrix polymer, and a compound (B) comprising, e.g. consisting of, the structural unit according to formula (I) in all the embodiments as defined above in the context of the polyolefin composition of the invention.

The master batch is then added to or mixed with the polyolefin (A) and possibly further polymer components and further processed in a known manner to produce an article, such as power cable.

When producing a power cable by extrusion, the polyolefin composition can be applied onto the metallic conductor and/or at least one coating layer thereof, e.g. a semiconductive layer or insulating layer. Typical extrusion conditions are mentioned in WO 93/08222.

Compounding may be performed by any known compounding process, including extruding the final product with a screw extruder or a kneader. The present invention furthermore relates to a wire or cable, comprising the polyolefin composition in any of the above described embodiments.

In a further embodiment, the disclosure relates to cable or wire comprising a layer which comprises a polyolefin composition of the present invention, as described herein, or a master batch of the present invention, as described herein.

In a preferred embodiment, the disclosure relates to a medium, high or extra high voltage cable comprising one or more conductors in a cable core, an inner semiconducting layer, followed by an insulating layer, and then an outer semiconducting layer, wherein at least one of these layers, preferably the insulating layer, comprises the polyolefin composition as described above.

The term "conductor" means herein above and below that the conductor comprises one or more wires. Moreover, the cable may comprise one or more such conductors. Preferably the conductor is an electrical conductor. One or more of those layers may also be cross-linked.

In addition to the semiconductive and insulating layers, further layers may be present in medium, high or extra high voltage cables, such as a metallic tape or wire shield, screen(s) and, finally, outermost jacketing layer(s).

The disclosure relates furthermore to the use of the polyolefin composition in any of the above described embodiments for the production of a layer of a wire or cable, preferably of a layer, more preferably an insulating layer, of a medium, high or extra high voltage cable.

Moreover, the disclosure relates to the use of the polyolefin composition, as described herein, for the production of a layer of a wire or cable.

The disclosure further relates to the use of the masterbatch, as described herein, for the production of a layer of a wire or cable.

The polyolefin composition comprising the above voltage stabiliser compound is improved especially in electrical breakdown strength and thus achieving an excellent molal voltage stabilisation, measured in the electrical tree testing method described below. This behaviour renders the polyolefin compositions highly suitable for the use as medium/high/extra high voltage cable insulation.

Preferred embodiments of this polyolefin composition are those comprising the above described compounds (A) and (B) in any of their above-described embodiments and amounts.

Finally, the invention relates to the use of a compound (B) as in all the embodiments described above in the context of the polyolefin composition as a voltage stabiliser in a polyolefin composition.

### Measurement Methods

#### a) Melt Flow Rate

The melt flow rate (MFR) is determined according to ISO 1133 and is indicated in g/10 min. The MFR is an

indication of the flowability, and hence the processability, of the polymer. The higher the melt flow rate, the lower the viscosity of the polymer. The MFR is determined at 190 °C for polyethylenes and may be determined at different loadings such as 2.16 kg ($MFR_2$) or 21.6 kg ($MFR_{21}$). The MFR is determined at 230 °C for polypropylenes.

**b) Determination of the Amount of Double Bonds**

**A) Quantification of the amount of carbon-carbon double bonds by IR spectroscopy**

Quantitative infrared (IR) spectroscopy is used to quantify the amount of carbon-carbon doubles (C=C) bonds. Calibration is achieved by prior determination of the molar extinction coefficient of the C=C functional groups in representative low molecular weight model compounds of known structure. The amount of each of these groups (N) is defined as number of carbon-carbon double bonds per thousand total carbon atoms (C=C/1000C) via:

$$N = (A \times 14) / (E \times L \times D)$$

where A is the maximum absorbance defined as peak height, E the molar extinction coefficient of the group in question ($l \cdot mol^{-1} \cdot mm^{-1}$), L the film thickness (mm) and D the density of the material ($g \cdot cm^{-1}$).

The total amount of C=C bonds per thousand total carbon atoms can be calculated through summation of N for the individual C=C containing components.

For polyethylene samples solid-state infrared spectra are recorded using a FTIR spectrometer (Perkin Elmer 2000) on compression moulded thin (0.5-1.0 mm) films at a resolution of 4 $cm^{-1}$ and analysed in absorption mode.

All quantification is undertaken using the absorption of the C=C-H out-of-plain bend between 910 and 960 cm-1. The specific wave number of the absorption is dependent on the chemical structure of the unsaturation containing species.

<u>1) Polymer compositions comprising polyethylene homopolymers and copolymers, except polyethylene copolymers with > 0.4 wt% polar comonomer</u>

For polyethylenes three types of C=C containing functional groups are quantified, each with a characteristic absorption and each calibrated to a different model compound resulting in individual extinction coefficients:

- vinyl (R-CH=CH2) via 910 $cm^{-1}$ based on 1-decene [dec-1-ene] giving E = 13.13 $l \cdot mol^{-1} \cdot mm^{-1}$
- vinylidene (RR'C=CH2) via 888 $cm^{-1}$ based on 2-methyl-1-heptene [2-methyhept-1-ene] giving E = 18.24 $l \cdot mol^{-1} \cdot mm^{-1}$
- trans-vinylene (R-CH=CH-R') via 965 $cm^{-1}$ based on trans-4-decene [(E)-dec-4-ene] giving E = 15.14 $l \cdot mol^{-1} \cdot mm^{-1}$

For polyethylene homopolymers or copolymers with < 0.4 wt% of polar comonomer linear baseline correction is applied between approximately 980 and 840 $cm^{-1}$.

<u>2) Polymer compositions comprising polyethylene copolymers with > 0.4 wt% polar comonomer</u>

For polyethylene copolymers with > 0.4 wt% of polar comonomer two types of C=C containing functional groups are quantified, each with a characteristic absorption and each calibrated to a different model compound resulting in individual extinction coefficients:

- vinyl (R-CH=CH2) via 910 $cm^{-1}$ based on 1-decene [dec-1-ene] giving E = 13.13 $l \cdot mol^{-1} \cdot mm^{-1}$
- vinylidene (RR'C=CH2) via 888 $cm^{-1}$ based on 2-methyl-1-heptene [2-methyhept-1-ene] giving E = 18.24 $l \cdot mol^{-1} \cdot mm^{-1}$

EBA:

For poly(ethylene-co-butylacrylate) (EBA) systems linear baseline correction is applied between approximately 920 and 870 $cm^{-1}$.

EMA:

For poly(ethylene-co-methylacrylate) (EMA) systems linear baseline correction was applied between approximately 930 and 870 $cm^{-1}$.

3) Polymer compositions comprising unsaturated low molecular weight molecules

For systems containing low molecular weight C=C containing species direct calibration using the molar extinction coefficient of the C=C absorption in the low molecular weight species itself is undertaken.

**B) Quantification of molar extinction coefficients by IR spectroscopy**

The molar extinction coefficient is determined according to the procedure given in ASTM D3124-98 and ASTM D6248-98. Solution-state infrared spectra are recorded using a FTIR spectrometer (Perkin Elmer 2000) equipped with a 0.1 mm path length liquid cell at a resolution of 4 $cm^{-1}$.

The molar extinction coefficient (E) was determined as $l \cdot mol^{-1} \cdot mm^{-1}$ via:

$$E = A / (C \times L)$$

where A is the maximum absorbance defined as peak height, C the concentration ($mol \cdot l^{-1}$) and L the cell thickness (mm).

At least three 0.18 $mol \cdot l^{-1}$ solutions in carbon disulphide ($CS_2$) are used and the mean value of the molar extinction coefficient determined.

**c) Determination of the Vinyl Content Originating from the Polyunsaturated Compound**

The amount of vinyl groups originating from the polyunsaturated comonomer per 1000 carbon atoms was determined and calculated as follows:

The polymer to be analyzed and a reference polymer have been produced on the same reactor, basically using the same conditions, i.e. similar peak temperatures, pressure and production rate, but with the only difference that the polyunsaturated comonomer is added to polymer to be analysed and not added to reference polymer. The total amount of vinyl groups of each polymer was determined by FT-IR measurements, as described above. Then, it is assumed that the base level of vinyl groups, i.e. the ones formed by the process and from chain transfer agents resulting in vinyl groups (if present), is the same for the reference polymer and the polymer to be analyzed with the only exception that in the polymer to be analyzed also a polyunsaturated comonomer is added to the reactor. This base level is then subtracted from the measured amount of vinyl groups in the polymer to be analyzed, thereby resulting in the amount of vinyl groups/1000 carbon atoms, which result from the polyunsaturated comonomer.

**d) Density**

The density was measured according to ISO 1183-1 / method A. The sample preparation was executed according to ISO 1872-2 Table 3 Q (compression moulding).

**Examples**

The following examples serve to further illustrate the present invention. Unless otherwise specified all the reagents are commercially available or can be produced according to methods well known in the literature.

**Inventive Example 1 (IE1):** composition comprising a mixture of 2-(1-methylethyl)-9H-thioxanthen-9-one (Formula II) CAS Nr. 5495-84-1, and 4-(1-methylethyl)-9H-thioxanthen-9-one (Formula III), CAS Nr. 83846-86-0.

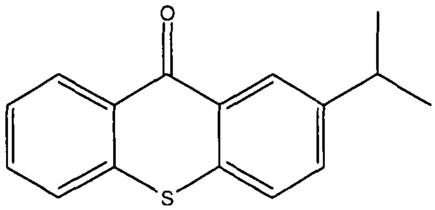

(II)

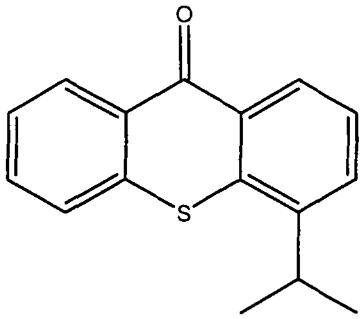

(III)

**Inventive Example 2 (IE2):** composition comprising 2-methoxy-9H-thioxanthen-9-one (Formula IV), CAS Nr 40478-82-8.

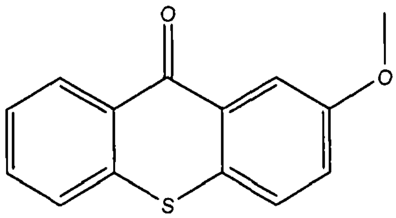

(IV)

**Inventive Example 3 (IE3):** composition comprising 10-methyl-10H-phenothiazine (Formula V), CAS Nr 1207-72-3.

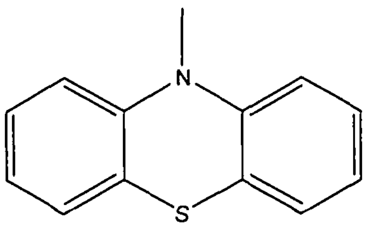

(V)

**Inventive Example 4 (IE4):** composition comprising 2-hydroxy-thioxanthen-9-one, 2-acetate(Formula VI)

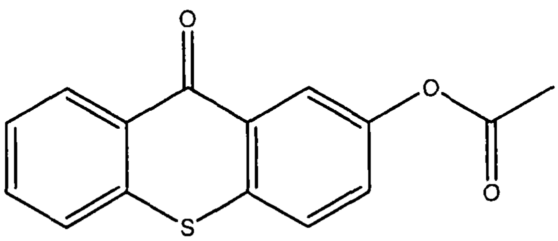

(VI)

The synthesis of 2-hydroxy-thioxanthen-9-one,2-acetate is performed as follows:

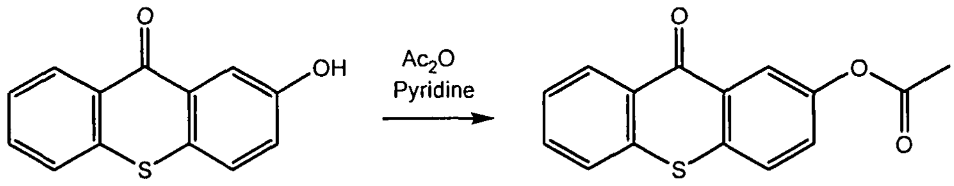


0.5 g of 2-hydroxy-9H-thioxanthene-9-one are dissolved in 5ml dry pyridine under nitrogen atmosphere. Then 0.25 g of acetic acid anhydride are added with a syringe through a septum. The reaction is stirred at room temperature for 10 minutes. A thin layer chromatography shows full conversion of 2-hydroxy-9H-thioxanthene-9-one after this period. Pyridine and rests of acetic acid anhydride are removed by vacuum distillation and the residue is recrystallized in acetone.Yield: 0,46 g (78% of theoretical) pale yellow powder, very pure as analyzed by NMR, $M_p$ = 139 - 141°C.

**Inventive Example 5 (IE5):** composition comprising 2-Propenoic acid, 2-methyl, 9-oxo-9H-thioxanthen-2-yl-ester (Formula V) CAS Nr. 1104728-85-9

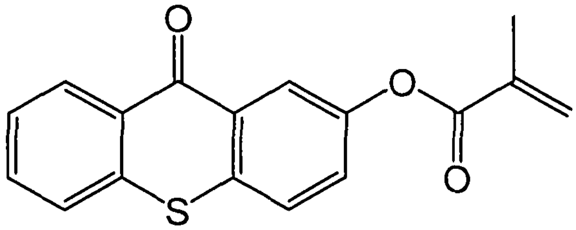

The synthesis of 2-Propenoic acid, 2-methyl, 9-oxo-9H-thioxanthen-2-yl-ester

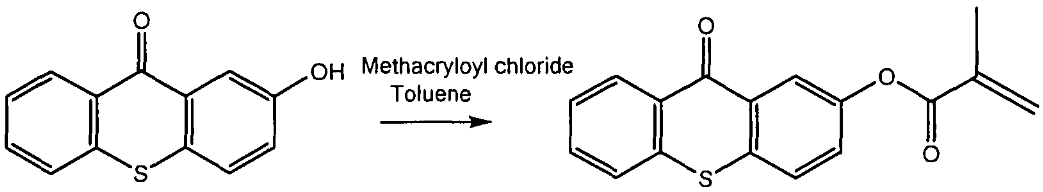


0.75 g of 2-hydroxy-9H-thioxanthene-9-one was dispersed in 40 ml of dry toluene under nitrogen atmosphere. Then 0.354 g of methacryloyl chloride was added using a syringe via a septum and the reaction mixture was slightly heated to 50 °C. Upon heating the mixture dissolved and it was maintained at this temperature for 3h. After cooling, the mixture was diluted with 100 ml diethylether and washed twice with 50 ml of deionized water. The organic phase was dried with $MgSO_4$ and the solution was then concentrated on the rotavapor to ~ 40 ml. Upon cooling in the refrigerator, the product crystallized and it was filtered off and dried, yielding 0.59 g of pale yellow powder (61% of Theor.). Mp = 163-166 °C.

$^1$H NMR (400 MHz, $CD_3OD$, ppm): 8.44 (d, 1H), 7.92 (d, 1H), 7.84 (dd, 1H), 7.76 (td, 1H), 7.64 (dd, 1H), 7.56 (td, 1H), 6.32 (s, 1H), 5.92 (s, 1H), 2.01 (s, 3H) $^{13}$C NMR (400 MHz, $CD_3OD$, ppm): 179.30, 166.19, 150.11, 137.51, 135.99, 134.82, 134.15, 130.28, 130.09, 129.24, 129.16, 128.68, 128.52, 127.95, 127.60, 122.25, 18.99

**Production and Testing of Compositions**

The compositions of the invention (Inventive Examples 1-5) (IE1-5) are tested together with a reference composition comprising 4,4'-di(dodecyloxy)benzil (Comparative Example 2) (CE2) described in EP 25 45 114 as voltage stabilizer.

A polymer without voltage stabilizer is used as base reference material (Comparative Example 1) (CE1).

The test arrangements are the same for the reference polymers and for the tested compositions.

A commercially available cross-linkable polyethylene with the grade name, LS4201S, supplied by Borealis, Sweden, which is prepared by high pressure polymerization and had a density of 0.922 g/cm$^3$ (ISO1872-2/ISO1183-2), $MFR_2$ (ISO 1133, load 2.16 kg, at 190 °C) of 2 g/10 min is used as base reference (CE1) and as the polymer for preparing the compositions of comparative 2 (CE2) and inventive example examples 1-5 (IE1-5).

The base reference polymer is in a form of pellets which contains dicumyl peroxide as a cross-linking agent. Before use, the pellets are ground to fine powder in a Retsch ZM-1 centrifugal mill with a 500 micrometer sieve. In the cases where voltage stabilizers are added, the powder is impregnated with the stabilizer dissolved in dichloromethane for one hour while agitated manually for about 30 s every 15 minutes. The solvent is then removed by means of rotary evaporation and vacuum oven to obtain a dry powder with a homogeneously distributed voltage stabiliser.

The test objects are prepared by compression moulding in two steps. In the first step, the polyethylene powder is formed to suitable shapes by melting at 130 °C and 10 kN press force for three minutes followed by 200 kN during another three minutes. A tungsten wire electrode with a diameter of 10 μm is then applied between two of the pre-pressed polymer pieces (30mm x 14mm x 1.5mm) and fastened with a piece of aluminium tape used as high voltage connection during the electrical treeing tests, as shown in Figure 1. In the second step the material is first melted at 130 °C during fifteen minutes to reduce the influence of interfaces between the pre-pressed blocks after which the temperature is ramped up to 180 °C and held for fifteen minutes for cross linking to take place. The press force is increased to 200 kN during the cross linking to inhibit the formation of gas filled voids from the cross linking by-products.

This procedure yield the wire electrode test object illustrated in Figure 2. To make the thermal history of the test objects as similar as possible, the samples are remelted at 130 °C in an oven and are allowed to cool slowly by switching the oven off.

**Electrical Treeing Evaluation**

Testing of electrical tree initiation field is performed in a setup, illustrated in Figure 3, under 50 Hz AC voltage ramping regime with a ramp rate of 20 V/s (rms). A 30 kV step-up variable transformer is used as voltage supply. To limit short circuit currents a water resistor of approximately 200 kΩ is connected in series with the tested object.

The electrical tree initiation tests are performed in transformer oil in a custom made container with optical detection system shown in Figure 4. The ramp speeds used are measured prior to testing. The treeing process is optically observed using a microscope coupled with a CCD camera, recording the process at 2 frames per second at a resolution of 2048 x 1532 pixels allowing detection of trees smaller than 10 μm for accurate determination of their initiation. The measurements are performed at ambient conditions.

The tree initiation field strength at the wire electrode is calculated from the applied voltage level using a simplified field enhancement factor of 21 $mm^{-1}$. This factor is calculated using 3D numerical simulations of the maximum electrical field in the test object using a finite element based software, Comsol Multiphysics.

The % improvement of the tree initiation field is calculated from the sum of the scale and the threshold parameter compared to the reference material (CE1) yielded by fitting the dataset to a 3-parameter Weibull distribution, using the maximum likelihood method in the software Minitab® version 16.2.4 in accordance with IEEE Std930TM-2004, "IEEE Guide for the Statistical Analysis of Electrical Breakdown Data". From every test object, four trees are used for calculating the tree initiation fields and trees growing in the immediate proximity of visible defects in the material or on the wire electrode are censored.

The gel-content of the crosslinked samples is determined gravimetrically using a solvent extraction technique. The samples (~100 mg) are placed in pre-weighed 100 mesh stainless steel baskets, and extracted in 1.1 $dm^3$ boiling decahydronaphthalene for 6 h. An antioxidant, 10 g Irganox 1076 from BASF, is added to prevent degradation. After 6h, the solvent is exchanged for 0.9 $dm^3$ new decahydronaphthalene (pre-heated) and the extraction continued for another two hours. The samples are left to evaporate at room temperature for one week under ventilation and finally dried under vacuum for 72h at 40 °C. After this period a constant weight is reached. The non-soluble fraction left in the baskets is weighed, and the gel-content of the polymers is calculated.

**MaTX extraction**

From test objects, identical to those used for electrical treeing, small flakes with thickness < 0.5 mm were sliced out. The slices were put in 100 mesh steel net pouches and were submitted to two consecutive extractions: First 16h in boiling diethyl ether followed by 5h in boiling dichloromethane with drying in vacuum oven overnight both between the two extraction steps and after last extraction step.

Transmission FTIR scans in the range 1550-1700 $cm^{-1}$ using a Perkin Elmer 2000 FTIR equipped with beam condenser were collected before and after extraction for all materials.

Three XLPE materials (test objects) were used for this test (cross-linked and degassed as for electrical treeing experiments): CE1, IE2 and IE5. CE1 shows no FTIR peak in the analyzed region while both IE2 and IE5 have a peak at 1642 or 1647 $cm^{-1}$ respectively. These peaks likely correspond to carbon-carbon stretching in the stabilizers. Peak heights were measured after substracting a baseline between bases of the peaks. In accordance with the Beer-Lambert law, the remaining stabilizer amounts after extraction can be calculated by relating stabilizer absorbance.

$$\frac{A_{After\ Extraction}}{A_{Initial}} = \frac{C_{After\ Extraction}}{C_{Initial}}$$

Where A and C are absorbance and concentration respectively.

The pure stabilizer compounds have corresponding peaks at 1632 and 1636 $cm^{-1}$ respectively. The pure compounds were measured in solid state using the same FTIR spectrophotometer equipped with a monolithic diamond ATR from PIKE (GladiATR). See table 4 below.

**Results**

From Table 1, it can be seen that the samples have a comparable gel content, thereby a comparable level of crosslinking. Further, the inventive example 5 has a slightly increased gel content, and thereby a slightly increased level of crosslinking. Table 2 shows the statistical data 3-parameter Weibull. From Table 3, it can be seen that the stabilizers have been evaluated on an equal molal basis and the inventive examples 1 to 5 show significantly increased tree initiation voltage compared to the comparative examples. In fact, CE2 in Table 3 has roughly the same tree initiation field as the inventive examples however when looking at the concentration on a mass scale (wt%), it shall be noted that the inventive examples have half the amount stabilizer added. Furthermore, from Table 4 it can be seen that the stabilizer in inventive example 5 (IE5) is retained to a surprisingly high amount in the polyolefin composition even after extraction. Thus, the stabilizer in inventive example 5 (IE5) may probably bind in to matrix of the polyolefin composition.

Table 1

| | CE1 | IE1 | IE1 | IE2 | IE3 | IE4 | IE5 |
|---|---|---|---|---|---|---|---|
| Concentration mmol/kg | - | 10 | 40 | 10 | 10 | 10 | 10 |
| Gel Content [%] | 81 | 81 | 78 | 81 | 80 | 82 | 83.5 |

Table 2

| | Number of failures (trees) | | Shape 90% confidence levels | | | Tree initiation field 90% confidence levels | |
|---|---|---|---|---|---|---|---|
| | | Shape | Lower | Upper | Tree initiation field [kV/mm] | Lower [kV/mm] | Upper [kV/mm] |
| CE1 | 56 | 1.65 | 1.30 | 2.09 | 296 | 289 | 302 |
| CE2 | 60 | 1.78 | 1.31 | 2.41 | 376 | 365 | 388 |
| IE1 | 28 | 3.00 | 1.23 | 7.32 | 385 | 374 | 395 |
| IE2 | 28 | 7.37 | 0.72 | 75.31 | 362 | 347 | 379 |
| IE3 | 24 | 2.27 | 0.86 | 5.98 | 341 | 320 | 363 |
| IE4 | 28 | 1.33 | 0.96 | 1.85 | 404 | 382 | 427 |
| IE5 | 22 | 9.34 | 0.60 | 146 | 459 | 444 | 475 |

Table 3

| | Conc [mmol/kg] | Conc [wt%] | Tree initiation field [kV/mm] | Difference to CE1 [kV/mm] | % Increase from CE1 |
|---|---|---|---|---|---|
| CE1 | | | 296 | | |
| CE2 | 10 | 0.58 | 376 | 81 | 27 |
| IE1 | 10 | 0.25 | 385 | 89 | 30 |
| IE2 | 10 | 0.24 | 362 | 67 | 23 |
| IE3 | 10 | 0.21 | 341 | 45 | 15 |
| IE4 | 10 | 0.27 | 404 | 108 | 37 |

(continued)

| | Conc [mmol/kg] | Conc [wt%] | Tree initiation field [kV/mm] | Difference to CE1 [kV/mm] | % Increase from CE1 |
|---|---|---|---|---|---|
| IE5 | 10 | 0.3 | 459 | 164 | 56 |

Table 4

| | Before extraction (Absorbance) | After extraction (Absorbance) | Remaining stabilizer (%) |
|---|---|---|---|
| IE5 (1647 $cm^{-1}$) | 0,226 | 0,174 | 77 |
| IE2 (1642 $cm^{-1}$) | 0,047 | 0,011 | 23 |

## Claims

1. Use of a compound (B) as a voltage stabiliser in a polyolefin composition, the compound (B) comprising, preferably consisting of, the structural unit according to the following formula (I):

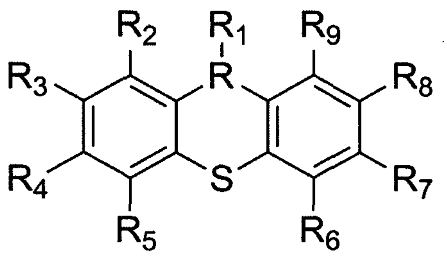

(I)

wherein

R is C or N;
$R_1$ is hydrogen, a heteroatom or a hydrocarbyl group which may contain heteroatoms;
$R_2$, $R_3$, $R_4$, $R_5$, $R_5$, $R_7$, $R_8$ and $R_9$ independently are hydrogen, or a hydrocarbyl group which may contain heteroatoms; or at least two of said $R_2$, $R_3$, $R_4$, $R_5$, $R_6$, $R_7$, $R_8$ and $R_9$ together with the ring atoms of the ring system of formula (I) they are attached to, form a further aromatic or non-aromatic ring fused to the ring system of formula (I).

2. The use of a compound (B) according to claim 1, wherein at least $R_2$ or $R_2$ and $R_9$ are hydrogen.

3. The use of a compound (B) according to claim 1 or 2 wherein R is C and $R_1$ is O.

4. The use of a compound (B) according to any of the preceding claims wherein $R_6$ or $R_8$ is selected from the group consisting of, alkyl, ether and ester group.

5. The use of a compound (B) according to claim 4 wherein $R_6$ or $R_8$ is $CH_3CO_2$- or $-OCH_3$ or $-C_3H_7$ or $CH_{2=}C(CH_3)CO_2$-.

6. The use of a compound (B) according to any one of the preceding claims, wherein the remaining of $R_2$, $R_3$, $R_4$, $R_5$, $R_6$, $R_7$, $R_8$ and $R_9$ are hydrogen.

7. The use of a compound (B) according to any one of claims 1 or 2 wherein R is N.

8. The use of a compound (B) according to claim 7 wherein $R_1$ is selected from the group consisting of of $-CH_3$, $-C_2H_5$, $-C_3H_7$, $-C_4H_9$,$-C_5H_{11}$, $-C_6H_{13}$, $-C_7H_{15}$, $-C_8H_{17}$, $-C_9H_{19}$, $-C_{10}H_{21}$, $-C_{11}H_{23}$ and $-C_{12}H_{25}$, and $R_2$, $R_3$, $R_4$, $R_5$, $R_6$, $R_7$, $R_8$ and $R_9$ are hydrogen.

9. The use of a compound (B) according to any one of claims 1 to 8, wherein the polyolefin composition is a power

cable polyolefin composition.

**Patentansprüche**

1. Verwendung einer Verbindung (B) als Spannungsstabilisator in einer Polyolefinzusammensetzung, wobei die Verbindung (B) die Struktureinheit gemäß der folgenden Formel (I) umfasst, vorzugsweise aus dieser besteht:

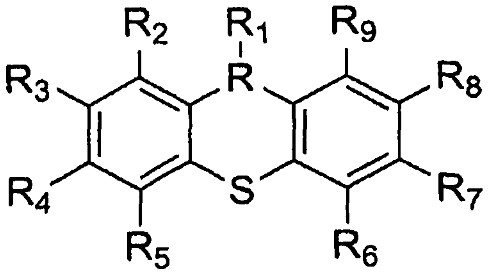

(I)

wobei

R gleich C oder N ist;
$R_1$ Wasserstoff, ein Heteroatom oder eine Kohlenwasserstoffgruppe, welche Heteroatome enthalten kann, ist;
$R_2$, $R_3$, $R_4$, $R_5$, $R_6$, $R_7$, $R_8$ und $R_9$ unabhängig voneinander Wasserstoff oder eine Kohlenwasserstoffgruppe, welche Heteroatome enthalten kann, sind; oder mindestens zwei der $R_2$, $R_3$, $R_4$, $R_5$, $R_6$, $R_7$, $R_8$ und $R_9$ zusammen mit den Ringatomen des Ringsystems der Formel (I), an die sie gebunden sind, einen weiteren aromatischen oder nicht aromatischen Ring bilden, der mit dem Ringsystem der Formel (I) vereinigt ist.

2. Verwendung einer Verbindung (B) gemäß Anspruch 1, wobei mindestens $R_2$ oder $R_2$ und $R_9$ Wasserstoff sind.

3. Verwendung einer Verbindung (B) gemäß Anspruch 1 oder 2, wobei R gleich C ist und $R_1$ gleich O ist.

4. Verwendung einer Verbindung (B) gemäß einem der vorhergehenden Ansprüche, wobei $R_6$ oder $R_8$ ausgewählt wird aus der Gruppe bestehend aus einer Alkyl-, Ether- und Ester-Gruppe.

5. Verwendung einer Verbindung (B) gemäß Anspruch 4, wobei $R_6$ oder $R_8$ für $CH_3CO_2$- oder $-OCH_3$ oder $-C_3H_7$ oder $CH_2{=}C(CH_3)CO_2$- steht.

6. Verwendung einer Verbindung (B) gemäß einem der vorhergehenden Ansprüche, wobei die verbleibenden Reste $R_2$, $R_3$, $R_4$, $R_5$, $R_6$, $R_7$, $R_8$ und $R_9$ Wasserstoff sind.

7. Verwendung einer Verbindung (B) gemäß einem der Ansprüche 1 oder 2, wobei R gleich N ist.

8. Verwendung einer Verbindung (B) gemäß Anspruch 7, wobei R1 ausgewählt wird aus der Gruppe bestehend aus $-CH_3$, $-C_2H_5$, $-C_3H_7$, $-C_4H_9$, $-C_5H_{11}$, $-C_6H_{13}$, $-C_7H_{15}$, $-C_8H_{17}$, $-C_9H_{19}$, $-C_{10}H_{21}$, $-C_{11}H_{23}$ und $-C_{12}H_{25}$, und $R_2$, $R_3$, $R_4$, $R_5$, $R_6$, $R_7$, $R_8$ und $R_9$ Wasserstoff sind.

9. Verwendung einer Verbindung (B) gemäß einem der Ansprüche 1 bis 8, wobei die Polyolefinzusammensetzung eine Stromkabel-Polyolefinzusammensetzung ist.

**Revendications**

1. Utilisation d’un composé (B) en tant que stabilisateur de tension dans une composition de polyoléfine, le composé (B) comprenant, de préférence étant constitué de, l’unité structurelle selon la formule (I) suivante :

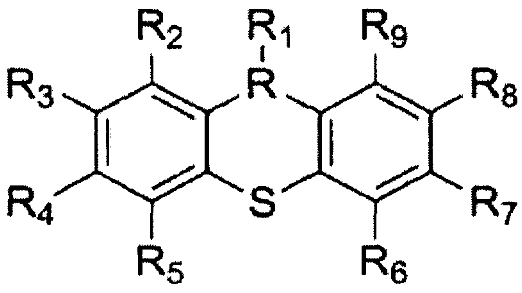

(I)

dans laquelle

R représente un atome de C ou de N ;
$R_1$ représente un atome d'hydrogène, un hétéroatome ou un groupe hydrocarbyle qui peut contenir des hétéroatomes ;
$R_2$, $R_3$, $R_4$, $R_5$, $R_6$, $R_7$, $R_8$ et $R_9$ représentent indépendamment un atome d'hydrogène, ou un groupe hydrocarbyle qui peut contenir des hétéroatomes ; ou au moins deux desdits $R_2$, $R_3$, $R_4$, $R_5$, $R_6$, $R_7$, $R_8$ et $R_9$ conjointement avec les atomes de noyau du système de noyaux de formule (I) auxquels ils sont fixés, forment un noyau aromatique ou non aromatique supplémentaire fusionné au système de noyaux de formule (I).

**2.** Utilisation d'un composé (B) selon la revendication 1, dans laquelle au moins $R_2$ ou $R_2$ et $R_9$ sont un atome d'hydrogène.

**3.** Utilisation d'un composé (B) selon la revendication 1 ou 2 dans laquelle R est un atome de C et $R_1$ est un atome d'O.

**4.** Utilisation d'un composé (B) selon l'une quelconque des revendications précédentes dans laquelle $R_6$ ou $R_8$ est choisi dans le groupe constitué d'un groupe alkyle, d'un groupe éther et d'un groupe ester.

**5.** Utilisation d'un composé (B) selon la revendication 4 dans laquelle $R_6$ ou $R_8$ est $CH_3CO_2$- ou $-OCH_3$ ou $-C_3H_7$ ou $CH_2=C(CH_3)CO_2$-.

**6.** Utilisation d'un composé (B) selon l'une quelconque des revendications précédentes, dans laquelle le reste des $R_2$, $R_3$, $R_4$, $R_5$, $R_6$, $R_7$, $R_8$ et $R_9$ sont des atomes d'hydrogène.

**7.** Utilisation d'un composé (B) selon l'une quelconque des revendications 1 ou 2 dans laquelle R est un atome de N.

**8.** Utilisation d'un composé (B) selon la revendication 7 dans laquelle $R_1$ est choisi dans le groupe constitué de $-CH_3$, $-C_2H_5$, $-C_3H_7$, $-C_4H_9$, $-C_5H_{11}$, $-C_6H_{13}$, $-C_7H_{15}$, $-C_8H_{17}$, $-C_9H_{19}$, $- C_{10}H_{21}$, $-C_{11}H_{23}$ et $-C_{12}H_{25}$, et $R_2$, $R_3$, $R_4$, $R_5$, $R_6$, $R_7$, $R_8$ et $R_9$ sont des atomes d'hydrogène.

**9.** Utilisation d'un composé (B) selon l'une quelconque des revendications 1 à 8, dans laquelle la composition de polyoléfine est une composition de polyoléfine pour câble électrique.

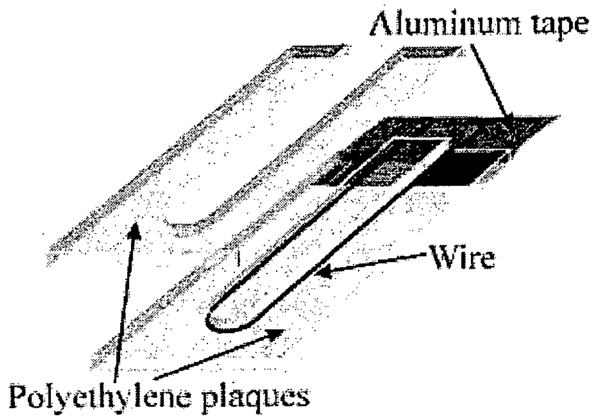


Figure 1

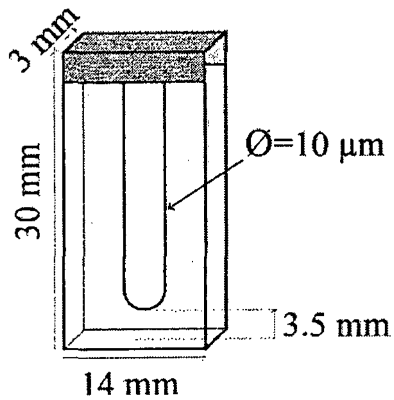


Figure 2

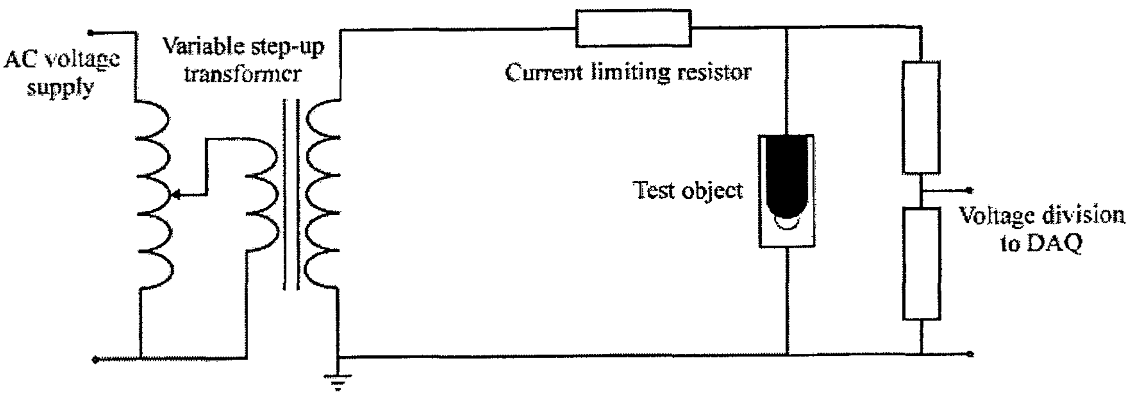


Figure 3

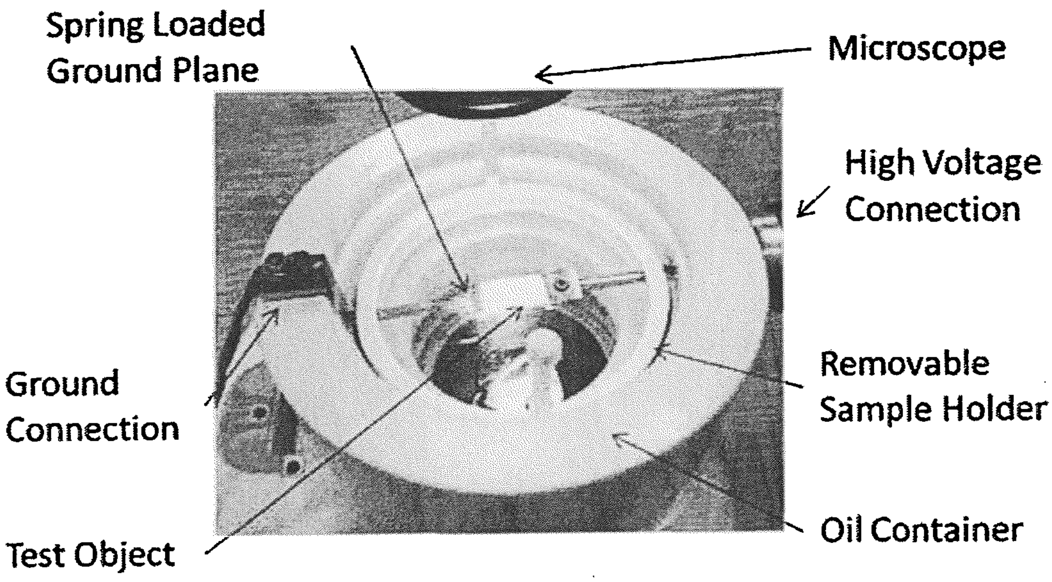
Spring Loaded
Ground Plane
Microscope
High Voltage
Connection
Ground
Connection
Removable
Sample Holder
Oil Container
Test Object

**Figure 4**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2545114 A
- WO 9308222 A

### Non-patent literature cited in the description

- **A.C. ASHCRAFT ; R.M. EICHHORN ; S.R.G.** Laboratory Studies of Treeing in Solid Dielectrics and Voltage Stabilization of Polyethylene. *I.E.E.E. International Symposium on Electrical Insulation,* 1978
- *CHEMICAL ABSTRACTS,* 5495-84-1
- *CHEMICAL ABSTRACTS,* 83846-86-0
- *CHEMICAL ABSTRACTS,* 40478-82-8
- *CHEMICAL ABSTRACTS,* 1207-72-3
- *CHEMICAL ABSTRACTS,* 1104728-85-9